# EUROPEAN PATENT APPLICATION

(11) **EP 4 811 643 A1**
(43) Date of publication of application: **23.09.2026**
(21) Application number: 26165094.9
(22) Date of filing: 16.03.2026
(51) Int. Cl.: H02M 7/5387, H02M 3/156, H02M 3/335, H02M 1/00, H02M 3/158, H02M 1/32, H02S 40/30, H02S 40/32, G05F 1/67

(54) **PHOTOVOLTAIC INVERTER AND DERATING CONTROL METHOD FOR PHOTOVOLTAIC INVERTER**

(30) Priority: 18.03.2025 CN 202510323958
(71) Applicant: HUAWEI TECHNOLOGIES CO., LTD., Shenzhen 518129 (CN)
(72) Inventor: LIAO, Weichao, Shenzhen 518129 (CN)
(74) Representative: Gill Jennings & Every LLP

(57) **Abstract**

Embodiments of this application provide a photovoltaic inverter and a derating control method for the photovoltaic inverter. The photovoltaic inverter includes an inverter circuit, a plurality of direct current conversion circuits, and a controller. The plurality of direct current conversion circuits are configured to: perform direct current conversion on a direct current from a photovoltaic module and output a converted direct current to the inverter circuit. The plurality of direct current conversion circuits include a first direct current conversion circuit and a second direct current conversion circuit. The inverter circuit is configured to convert direct currents from the plurality of direct current conversion circuits into alternating currents. When the photovoltaic inverter is in a derating mode, an input voltage of the first direct current conversion circuit is controlled to increase, to decrease output power of the first direct current conversion circuit, so as to decrease output power of the inverter circuit. The input voltage of the first direct current conversion circuit is less than an input voltage of the second direct current conversion circuit.

## Description

### TECHNICAL FIELD

This application relates to the field of power electronics, and in particular, to a photovoltaic inverter and a derating control method for the photovoltaic inverter.

### BACKGROUND

In a photovoltaic system equipped with a photovoltaic inverter, when a direct current bus voltage of the photovoltaic inverter is excessively high, or a difference between a power grid voltage and a direct current bus voltage is excessively large, or an internal temperature of the photovoltaic inverter is excessively high, the photovoltaic inverter usually needs to run in a derating mode, to be specific, output power of the photovoltaic inverter is decreased, to ensure stable running of the photovoltaic inverter in a special operating condition and prolong a service life of the device. In an actual derating process, a voltage on a direct current bus in the photovoltaic inverter is easily increased. The increase in the bus voltage results in an increase in stress of a switching transistor in the photovoltaic inverter, thereby increasing a thermal loss in the switching transistor.

### SUMMARY

This application provides a photovoltaic inverter and a derating control method for the photovoltaic inverter, to decrease a fluctuation amplitude of a bus voltage of the photovoltaic inverter while implementing a derating requirement of the photovoltaic inverter.

According to a first aspect, this application provides a photovoltaic inverter. The photovoltaic inverter includes an inverter circuit, a plurality of direct current conversion circuits, and a controller. The plurality of direct current conversion circuits are configured to: perform direct current conversion on a direct current from a photovoltaic module and output a converted direct current to the inverter circuit. The plurality of direct current conversion circuits include a first direct current conversion circuit and a second direct current conversion circuit. The inverter circuit is configured to convert direct currents from the plurality of direct current conversion circuits into alternating currents. When the photovoltaic inverter is in a derating mode, the controller is configured to control an input voltage of the first direct current conversion circuit to increase, to decrease output power of the first direct current conversion circuit, so as to decrease output power of the inverter circuit. The input voltage of the first direct current conversion circuit is less than an input voltage of the second direct current conversion circuit.

When the photovoltaic inverter operates normally, to ensure a high power generation amount, the direct current conversion circuit usually controls a corresponding photovoltaic string to operate at a maximum power point. The photovoltaic string includes a plurality of photovoltaic modules connected in series and is electrically connected to the direct current conversion circuit through a photovoltaic terminal. When the photovoltaic inverter is overheated due to a fault, to ensure running safety of the photovoltaic inverter, output power of the photovoltaic inverter needs to be decreased, in other words, the photovoltaic inverter enters the derating mode. It should be noted that the output power of the photovoltaic inverter is equal to a product of a power grid voltage and an output current of the photovoltaic inverter. Because the power grid voltage is basically stable, the derating mode of the photovoltaic inverter is usually implemented by decreasing the output current of the photovoltaic inverter. This is reflected on a P-V curve of the photovoltaic string. To be specific, an operating point of the photovoltaic string moves leftward or rightward from a maximum power point. When the operating point moves leftward, an output voltage of the photovoltaic string is less than a voltage corresponding to the maximum power point. When the operating point moves rightward, an output voltage of the photovoltaic string is greater than a voltage corresponding to the maximum power point. Currently, in the industry, the operating point of the photovoltaic string is usually controlled to move rightward, in other words, the output voltage of the photovoltaic string (which is equivalent to the input voltage of the direct current conversion circuit) is increased, to decrease the output power of the photovoltaic inverter. Because the photovoltaic inverter includes the plurality of direct current conversion circuits and photovoltaic strings connected to the direct current conversion circuits are different, P-V curves of the photovoltaic strings corresponding to the direct current conversion circuits are usually different accordingly. A magnitude of a direct current bus voltage of the photovoltaic inverter is directly related to a largest input voltage in the plurality of direct current conversion circuits. Therefore, compared with a photovoltaic string with a larger voltage corresponding to a maximum power point, a photovoltaic string with a smaller voltage corresponding to a maximum power point is controlled to move an operating point rightward while the direct current bus voltage is kept stable, so that the photovoltaic inverter can implement more power derating.

In this way, when the photovoltaic inverter provided in this application enters the derating mode, the photovoltaic string with a smaller voltage corresponding to a maximum power point is preferably controlled to move the operating point rightward, and an output voltage of the photovoltaic string is kept less than or equal to the largest input voltage in the plurality of current direct current conversion circuits, so that more power derating can be implemented while the direct current bus voltage is kept stable, and overstress of a switching transistor in the inverter circuit can be avoided. The direct current bus is configured to electrically connect the plurality of direct current conversion circuits and the inverter circuit. It should be noted that, for ease of understanding, the foregoing is described from a perspective that the photovoltaic inverter switches to the derating mode for the first time from a normal state, that is, the corresponding photovoltaic string operates at the maximum power point. In actual application, it is possible that the photovoltaic inverter is still overheated after one-time derating. In this case, an output voltage of a photovoltaic string whose operating point has been moved rightward once may need to be increased again, in other words, the operating point of the corresponding photovoltaic string is further moved rightward. Correspondingly, a photovoltaic string whose current output voltage is smaller is still preferably controlled to move an operating point rightward, and the output voltage of the photovoltaic string is kept less than or equal to the largest input voltage in the plurality of current direct current conversion circuits. When the direct current bus voltage is kept stable, the photovoltaic string with a smaller output voltage can implement more power derating, thereby avoiding overstress of the switching transistor in the inverter circuit.

In a possible implementation, the plurality of direct current conversion circuits include at least one third direct current conversion circuit, an input voltage of the third direct current conversion circuit is greater than the input voltage of the first direct current conversion circuit, and the input voltage of the first direct current conversion circuit is less than or equal to an average value of input voltages of the plurality of direct current conversion circuits. Because the input voltage of the first direct current conversion circuit is in a low range, compared with preferably boosting a direct current conversion circuit whose input voltage is greater than the average value of the input voltages, preferably boosting the input voltage of the first direct current conversion circuit can make the photovoltaic inverter implement more power derating while keeping the direct current bus voltage stable.

In a possible implementation, the first direct current conversion circuit is a direct current conversion circuit with a smallest input voltage in the plurality of direct current conversion circuits. Because the input voltage of the first direct current conversion circuit is the smallest, in comparison with boosting an input voltage of another direct current conversion circuit, a difference between the input voltage of the first direct current conversion circuit and the largest input voltage in the plurality of direct current conversion circuits is the largest. Preferably boosting the input voltage of the first direct current conversion circuit can implement maximum power derating while keeping the direct current bus voltage stable. In addition, in a process of controlling the input voltage of the first direct current conversion circuit to increase, input voltages of one or more other direct current conversion circuits may be further controlled to increase simultaneously, thereby improving derating efficiency of the photovoltaic inverter.

In a possible implementation, the photovoltaic inverter includes a direct current bus, and output ends of the plurality of direct current conversion circuits are connected in parallel and then connected to an input end of the inverter circuit through the direct current bus. When a temperature of the photovoltaic inverter is greater than or equal to a first threshold, or a direct current bus voltage is greater than or equal to a second threshold, or a difference between a power grid voltage and a direct current bus voltage is greater than or equal to a third threshold, the photovoltaic inverter is in the derating mode. In other words, when it is detected that the photovoltaic inverter is overheated or overvoltage occurs in the photovoltaic inverter, the controller controls the photovoltaic inverter to enter the derating mode, to ensure safety in a running process of the photovoltaic inverter.

In a possible implementation, when the controller controls the input voltage of the first direct current conversion circuit to increase, the input voltage of the second direct current conversion circuit is controlled to remain unchanged, to avoid a case in which the input voltage of the second direct current conversion circuit exceeds the largest input voltage in the plurality of direct current conversion circuits, thereby avoiding an increase in the bus voltage.

In a possible implementation, the controller is configured to control the input voltage of the first direct current conversion circuit to increase from a maximum power point of a correspondingly connected photovoltaic string, so that an output voltage of the photovoltaic string connected to the first direct current conversion circuit is increased from a voltage corresponding to the maximum power point. If the output voltage of the photovoltaic string is controlled to decrease for derating, the output voltage of the photovoltaic string may be decreased to a shutdown voltage value of the photovoltaic inverter. Consequently, the photovoltaic inverter is triggered to shut down due to input undervoltage, and normal operation of the photovoltaic inverter is affected. Therefore, controlling the output voltage of the photovoltaic string to increase from the voltage corresponding to the maximum power point can avoid input undervoltage of the photovoltaic inverter while implementing power derating.

In a possible implementation, the controller is configured to: in a process of controlling the input voltage of the first direct current conversion circuit to increase, when output power of the photovoltaic inverter is less than a specified threshold, determine that the current output power of the photovoltaic inverter meets a derating requirement and control the photovoltaic inverter to exit the derating mode.

In a possible implementation, the controller is configured to: in a process of controlling the input voltage of the first direct current conversion circuit to increase, when the input voltage of the first direct current conversion circuit reaches the largest input voltage in the plurality of direct current conversion circuits, and output power of the photovoltaic inverter is greater than or equal to a specified threshold, control the input voltage of the first direct current conversion circuit to remain unchanged, so as to avoid an increase in the bus voltage. Because the current output power of the photovoltaic inverter does not meet the derating requirement, controlling the input voltage of the second direct current conversion circuit to increase can make the photovoltaic inverter implement more power derating.

In a possible implementation, the controller is configured to: in a process of controlling the input voltage of the first direct current conversion circuit to increase, when the input voltage of the first direct current conversion circuit is equal to the input voltage of the second direct current conversion circuit, control the input voltage of the first direct current conversion circuit and the input voltage of the second direct current conversion circuit to increase simultaneously, thereby improving derating efficiency of the photovoltaic inverter.

In a possible implementation, the photovoltaic inverter includes an arc-fault circuit interrupter, and the plurality of direct current conversion circuits are connected to a same arc-fault circuit interrupter. The controller is further configured to: in the process of controlling the input voltage of the first direct current conversion circuit to increase, when a difference between an input current of the first direct current conversion circuit and an input current of another direct current conversion circuit is greater than or equal to a fourth threshold, control the input voltage of the first direct current conversion circuit to remain unchanged, and control an input voltage of the another direct current conversion circuit to increase. This can avoid interference on detection precision of the arc-fault circuit interrupter due to an excessively large difference between input currents of the direct current conversion circuits.

According to a second aspect, this application provides a derating control method for a photovoltaic inverter. The photovoltaic inverter includes an inverter circuit and a plurality of direct current conversion circuits. The plurality of direct current conversion circuits are configured to: perform direct current conversion on a direct current from a photovoltaic module and output a converted direct current to the inverter circuit. The inverter circuit is configured to convert direct currents from the plurality of direct current conversion circuits into alternating currents. The plurality of direct current conversion circuits include a first direct current conversion circuit and a second direct current conversion circuit. The method includes: when the photovoltaic inverter is in a derating mode, controlling an input voltage of the first direct current conversion circuit to increase, to decrease output power of the first direct current conversion circuit, so as to decrease output power of the inverter circuit, where the input voltage of the first direct current conversion circuit is less than an input voltage of the second direct current conversion circuit.

In this implementation, when the photovoltaic inverter enters the derating mode, a photovoltaic string with a smaller voltage corresponding to a maximum power point is preferably controlled to move the operating point rightward, and an output voltage of the photovoltaic string is kept less than or equal to the largest input voltage in the plurality of current direct current conversion circuits, so that more power derating can be implemented while a direct current bus voltage is kept stable, and overstress of a switching transistor in the inverter circuit can be avoided. A direct current bus is configured to electrically connect the plurality of direct current conversion circuits and the inverter circuit. It should be noted that, for ease of understanding, the foregoing is described from a perspective that the photovoltaic inverter switches to the derating mode for the first time from a normal state, that is, the corresponding photovoltaic string operates at the maximum power point. In actual application, it is possible that the photovoltaic inverter is still overheated after one-time derating. In this case, an output voltage of a photovoltaic string whose operating point has been moved rightward once may need to be increased again, in other words, the operating point of the corresponding photovoltaic string is further moved rightward. Correspondingly, a photovoltaic string whose current output voltage is smaller is still preferably controlled to move an operating point rightward, and the output voltage of the photovoltaic string is kept less than or equal to the largest input voltage in the plurality of current direct current conversion circuits. When the direct current bus voltage is kept stable, the photovoltaic string with a smaller output voltage can implement more power derating, thereby avoiding overstress of the switching transistor in the inverter circuit.

In a possible implementation, the plurality of direct current conversion circuits include at least one third direct current conversion circuit. An input voltage of the third direct current conversion circuit is greater than the input voltage of the first direct current conversion circuit. The method further includes: controlling the input voltage of the first direct current conversion circuit to increase, where the input voltage of the first direct current conversion circuit is less than or equal to an average value of input voltages of the plurality of direct current conversion circuits. Because the input voltage of the first direct current conversion circuit is in a low range, compared with preferably boosting a direct current conversion circuit whose input voltage is greater than the average value of the input voltages, preferably boosting the input voltage of the first direct current conversion circuit can make the photovoltaic inverter implement more power derating while keeping the direct current bus voltage stable.

In a possible implementation, the method further includes: preferably controlling the input voltage of the first direct current conversion circuit to increase, where the first direct current conversion circuit is a direct current conversion circuit with a smallest input voltage in the plurality of direct current conversion circuits. In comparison with boosting an input voltage of another direct current conversion circuit, a difference between the input voltage of the first direct current conversion circuit and the largest input voltage in the plurality of direct current conversion circuits is the largest. Preferably boosting the input voltage of the first direct current conversion circuit can implement maximum power derating while keeping the direct current bus voltage stable.

In a possible implementation, the method further includes: when the input voltage of the first direct current conversion circuit is controlled to increase, controlling the input voltage of the second direct current conversion circuit to remain unchanged, to avoid a case in which the input voltage of the second direct current conversion circuit exceeds the largest input voltage in the plurality of direct current conversion circuits, thereby avoiding an increase in the bus voltage.

In a possible implementation, the method further includes: controlling the input voltage of the first direct current conversion circuit to increase from a maximum power point of a correspondingly connected photovoltaic string, so that an output voltage of the photovoltaic string connected to the first direct current conversion circuit is increased from a voltage corresponding to the maximum power point. If the output voltage of the photovoltaic string is controlled to decrease, the output voltage of the photovoltaic string may be decreased to a shutdown voltage value of the photovoltaic inverter. Consequently, the photovoltaic inverter is triggered to shut down due to input undervoltage, and normal operation of the photovoltaic inverter is affected. Therefore, controlling the output voltage of the photovoltaic string to increase from the voltage corresponding to the maximum power point can avoid input undervoltage of the photovoltaic inverter while implementing power derating.

### BRIEF DESCRIPTION OF DRAWINGS

FIG. 1 is a diagram of an architecture of a photovoltaic system;
FIG. 2 is a simple diagram of a photovoltaic inverter according to this application;
FIG. 3 is a P-V curve diagram of a photovoltaic string;
FIG. 4 is a P-V curve diagram of different photovoltaic strings connected to a photovoltaic inverter according to this application;
FIG. 5 is another simple diagram of a photovoltaic inverter according to this application; and
FIG. 6 is a schematic flowchart of a derating control method for a photovoltaic inverter according to this application.

### DESCRIPTION OF EMBODIMENTS

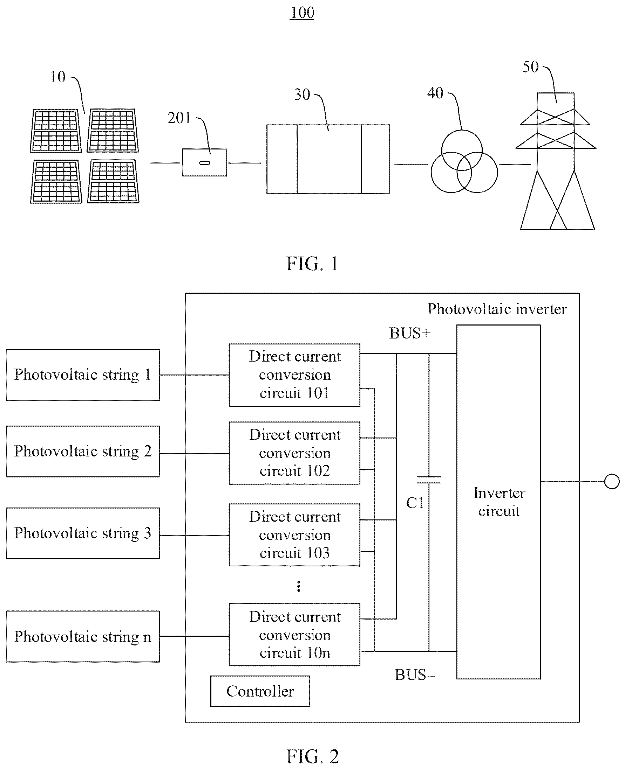

FIG. 1 is a diagram of an architecture of a photovoltaic system. Refer to FIG. 1. In a photovoltaic system 100, a photovoltaic module 10 directly converts solar energy into electric energy by using photovoltaic effect. The photovoltaic module 10 usually includes a plurality of cells connected in series or in parallel, to implement specific output power. A photovoltaic inverter 201 is configured to: convert a direct current from the photovoltaic module 10 into an alternating current, and transmit the alternating current to a box-type transformer station 30 corresponding to the photovoltaic inverter 201 for voltage transformation. The box-type transformer station 30 corresponding to the photovoltaic inverter 201 can convert a low-voltage alternating current output by the photovoltaic inverter 201 into a medium-voltage alternating current, and then transmit the alternating current to a booster station 40 and to a power grid 50 or another load.

During normal running, the photovoltaic inverter 201 usually runs in a maximum power point tracking mode. Each direct current conversion circuit in the photovoltaic inverter can independently control an input voltage of the direct current conversion circuit, perform maximum power point tracking on a photovoltaic string connected to the direct current conversion circuit, and control the input voltage to be a voltage corresponding to a maximum power point, to improve power generation efficiency of the photovoltaic system.

In the photovoltaic system shown in FIG. 1, the photovoltaic inverter needs to switch from the maximum power point tracking mode to a derating mode in some cases. For example, when a direct current bus voltage of the photovoltaic inverter is excessively high, or a difference between a power grid voltage and a direct current bus voltage is excessively large, or an internal temperature is excessively high due to a fault of a heat dissipation fan of the photovoltaic inverter, and the like, the photovoltaic inverter usually needs to run in the derating mode, to decrease output power. However, in an actual derating process, the direct current bus voltage of the photovoltaic inverter is easily increased. The increase in the bus voltage results in an increase of a voltage at an input end of the inverter circuit, and results in an increase in stress of a switching transistor in the inverter circuit, thereby increasing a thermal loss in the switching transistor.

FIG. 2 is a simple diagram of a photovoltaic inverter according to this application. The photovoltaic inverter includes an inverter circuit, a plurality of direct current conversion circuits, and a controller. The photovoltaic inverter includes n direct current conversion circuits in total: a direct current conversion circuit 101 to a direct current conversion circuit 10n, where n is an integer greater than 1. Input ends of the direct current conversion circuit 101 to the direct current conversion circuit 10n are respectively connected to a photovoltaic string 1 to a photovoltaic string n, and output ends of the plurality of direct current conversion circuits are connected in parallel, and are connected to an input end of the inverter circuit through a direct current bus. The photovoltaic string n may be a string group, and includes one photovoltaic string or a plurality of photovoltaic strings connected in parallel. A bus capacitor C1 is connected between a positive direct current bus BUS+ and a negative direct current bus BUS-. Each direct current conversion circuit is configured to: perform direct current conversion on a direct current from a corresponding photovoltaic string, and output a direct current obtained after direct current conversion (for example, voltage boosting) to the bus capacitor C1. The inverter circuit obtains the direct current from the bus capacitor C1, converts the direct current into an alternating current, and outputs the alternating current to a power grid or a load. In the photovoltaic inverter shown in FIG. 2, if the photovoltaic inverter first runs in a maximum power point tracking mode, each of input voltages of the direct current conversion circuit 101 to the direct current conversion circuit 10n is a voltage corresponding to a maximum power point, and an output voltage of the photovoltaic string connected to each direct current conversion circuit is the voltage corresponding to the maximum power point. After the photovoltaic inverter switches to a derating mode, an operating point of the photovoltaic string is usually controlled to move rightward, in other words, the input voltage of the direct current conversion circuit is increased, to decrease output power of the photovoltaic inverter. It should be noted that a magnitude of a direct current bus voltage of the photovoltaic inverter is directly related only to an input voltage of a direct current conversion circuit with a largest input voltage in the plurality of direct current conversion circuits. Specifically, if the input voltage of the direct current conversion circuit with the largest input voltage is increased, the direct current bus voltage of the photovoltaic inverter is increased accordingly. If an input voltage of another direct current conversion circuit changes and does not exceed the largest input voltage, the direct current bus voltage remains stable.

For example, in the direct current conversion circuit 101 to the direct current conversion circuit 10n, the input voltage of the direct current conversion circuit 10n is the largest (for example, 490 v). If an input voltage of a direct current conversion circuit is controlled to exceed the input voltage of the direct current conversion circuit 10n, the direct current bus voltage of the photovoltaic inverter, namely, a voltage at two ends of the bus capacitor C1, is increased. If the input voltages of the direct current conversion circuit 101 and the direct current conversion circuit 102 are 400 V and 450 V respectively, in other words, the input voltage of the direct current conversion circuit 101 is less than the input voltage of the direct current conversion circuit 102, to decrease a fluctuation amplitude of the direct current bus voltage while derating the photovoltaic inverter, the input voltage of the direct current conversion circuit 101 is first controlled to increase, the photovoltaic string 1 connected to the direct current conversion circuit 101 deviates from a maximum power point, and output power of the photovoltaic string 1 is decreased to derate the photovoltaic inverter. Herein, because a difference between the input voltage of the direct current conversion circuit 101 and the input voltage of the direct current conversion circuit 10n is 90 v (490 v - 400 v), and a difference between the input voltage of the direct current conversion circuit 102 and the input voltage of the direct current conversion circuit 10n is only 40 v (490 v - 450 v), a difference between the input voltage of the direct current conversion circuit 101 and the largest input voltage in the plurality of direct current conversion circuits is larger. Preferably controlling the input voltage of the direct current conversion circuit 101 to increase can make the photovoltaic inverter implement more power derating while keeping the direct current bus voltage stable.

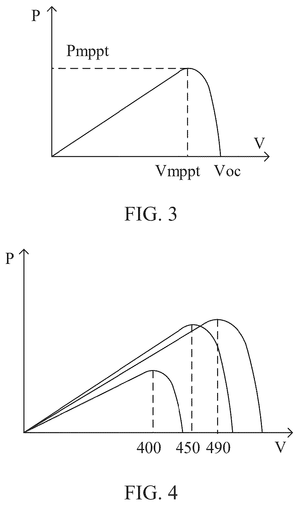

In some feasible implementations, after the photovoltaic inverter switches to the derating mode, the controller in the photovoltaic inverter is configured to control an input voltage of a first direct current conversion circuit to increase from a maximum power point of a correspondingly connected photovoltaic string, that is, a case in which the photovoltaic inverter is derated for the first time. FIG. 3 is a P-V curve diagram of a photovoltaic string. As shown in FIG. 3, under same illumination and temperature conditions, when an output voltage V of the photovoltaic string changes, output power P of the photovoltaic string changes accordingly. When the photovoltaic string operates at a maximum power point, the output voltage of the photovoltaic string is a maximum power point voltage Vmppt, and the output power of the photovoltaic string reaches maximum power Pmppt. When the photovoltaic string connected to the first direct current conversion circuit operates at the maximum power point, an operating point of the photovoltaic string is controlled to move leftward or rightward from the maximum power point to deviate from the maximum power point. If the operating point of the photovoltaic string is controlled to move leftward from the maximum power point, in other words, the output voltage of the photovoltaic string is controlled to decrease, and the output voltage of the photovoltaic string may be decreased to a shutdown voltage value of the photovoltaic inverter. Consequently, the photovoltaic inverter is triggered to shut down due to input undervoltage, and normal operation of the photovoltaic inverter is affected. Therefore, in this application, the operating point of the photovoltaic string is controlled to move rightward from the maximum power point, in other words, the output voltage of the photovoltaic string is controlled to increase (up to an open-circuit voltage Voc), to derate the photovoltaic inverter and avoid shutdown caused by input undervoltage of the photovoltaic inverter.

Optionally, in actual application, it is possible that the photovoltaic inverter is still overheated after one-time derating. In this case, an output voltage of a photovoltaic string whose operating point has been moved rightward once may need to be increased again, in other words, the operating point of the corresponding photovoltaic string is further moved rightward. For example, the photovoltaic inverter shown in FIG. 2 is used as an example. In the first derating of the photovoltaic inverter, the photovoltaic string 1 connected to the direct current conversion circuit 101 is controlled to move rightward from the maximum power point, for example, an output voltage of the photovoltaic string 1 is controlled to range from 400 v to 440 v, to implement power derating. If the photovoltaic inverter is still overheated after the first derating, because the output voltage of the current photovoltaic string 1 is still less than an output voltage (450 v) of the photovoltaic string 2, an operating point of the photovoltaic string 1 is preferably controlled to further move rightward. This can implement more power derating while keeping the direct current bus voltage stable, thereby further meeting a derating requirement of the photovoltaic inverter.

Optionally, in actual application, in a process in which the inverter controls the input voltage of the first direct current conversion circuit to increase, when output power of the photovoltaic inverter is less than a specified threshold, it is determined that the current output power of the photovoltaic inverter meets a derating requirement. In this case, the photovoltaic inverter is controlled to exit the derating mode, to avoid excessively low output power of the photovoltaic inverter.

Optionally, in a process of controlling the input voltage of the first direct current conversion circuit to increase, when the input voltage of the first direct current conversion circuit reaches a largest input voltage in the plurality of direct current conversion circuits, and the output power of the photovoltaic inverter is greater than or equal to a specified threshold, the input voltage of the first direct current conversion circuit is controlled to remain unchanged, and an input voltage of the second direct current conversion circuit is controlled to increase. The photovoltaic inverter shown in FIG. 2 is still used as an example. After the photovoltaic inverter switches to the derating mode, the input voltage of the direct current conversion circuit 101 is first controlled to increase. If the output power of the photovoltaic inverter is greater than or equal to the specified threshold after the input voltage of the direct current conversion circuit 101 is increased to 490 v, in other words, the input voltage of the direct current conversion circuit 101 reaches the largest input voltage in the plurality of direct current conversion circuits, the current output power of the photovoltaic inverter does not meet the derating requirement. Therefore, the controller controls the input voltage of the direct current conversion circuit 101 to remain unchanged to prevent the bus voltage from increasing, and controls an input voltage of the direct current conversion circuit 102 to increase, to decrease the output power of the direct current conversion circuit 102, so that the photovoltaic inverter implements more power derating.

Optionally, when the controller controls the input voltage of the first direct current conversion circuit to increase, and the input voltage of the first direct current conversion circuit is increased to be the same as the input voltage of the second direct current conversion circuit, the controller simultaneously controls the input voltage of the first direct current conversion circuit and the input voltage of the second direct current conversion circuit to increase. Similarly, the photovoltaic inverter shown in FIG. 2 is used as an example. After the photovoltaic inverter switches to the derating mode, the input voltage of the direct current conversion circuit 101 is first controlled to increase. After the input voltage of the direct current conversion circuit 101 is increased to 450 v, the input voltage of the direct current conversion circuit 101 is the same as the input voltage of the direct current conversion circuit 102. In this case, the input voltage of the direct current conversion circuit 101 and the input voltage of the direct current conversion circuit 102 are controlled to increase simultaneously, and the photovoltaic string connected to the direct current conversion circuit 101 and the photovoltaic string connected to the direct current conversion circuit 102 both deviate from maximum power points. In addition, decreasing output power of the direct current conversion circuit 101 and the output power of the direct current conversion circuit 102 improves derating efficiency of the photovoltaic inverter.

In some feasible implementations, when the controller controls the input voltage of the first direct current conversion circuit to increase, the input voltage of the second direct current conversion circuit remains unchanged. Similarly, the photovoltaic inverter shown in FIG. 2 is used as an example. After the photovoltaic inverter switches to the derating mode, to make the photovoltaic inverter implement more power derating while keeping the direct current bus voltage stable, the input voltage of the direct current conversion circuit 101 with the smaller input voltage is first controlled to increase, and the photovoltaic string 1 connected to the direct current conversion circuit 101 deviates from the maximum power point, to decrease the output power of the direct current conversion circuit 101. Because a magnitude of the direct current bus voltage is directly related to the largest input voltage in the plurality of direct current conversion circuits, in a process of controlling the input voltage of the direct current conversion circuit 101 to increase, the input voltage of the direct current conversion circuit 101 is kept less than or equal to the largest input voltage in the plurality of current direct current conversion circuits. Because the input voltage of the direct current conversion circuit 102 is large, the input voltage of the direct current conversion circuit 102 is controlled to remain unchanged, to avoid a case in which the input voltage of the direct current conversion circuit 102 exceeds the largest input voltage in the plurality of direct current conversion circuits, thereby avoiding an increase in the bus voltage.

In some feasible implementations, the plurality of direct current conversion circuits of the photovoltaic inverter include at least one third direct current conversion circuit. An input voltage of the third direct current conversion circuit is greater than the input voltage of the first direct current conversion circuit. After the photovoltaic inverter switches to the derating mode, the controller in the photovoltaic inverter is configured to control the input voltage of the first direct current conversion circuit to increase, and the input voltage of the first direct current conversion circuit is less than or equal to an average value of input voltages of the plurality of direct current conversion circuits. Specifically, the photovoltaic inverter shown in FIG. 2 is used as an example. After the photovoltaic inverter switches to the derating mode, input voltages of the direct current conversion circuit 101 to the direct current conversion circuit 10n are obtained, and an average value of the input voltages of the plurality of direct current conversion circuits is obtained based on the input voltages of the direct current conversion circuits. Then, the controller uses a direct current conversion circuit whose input voltage is less than the average value of the input voltages of the plurality of direct current conversion circuits as the first direct current conversion circuit, and controls the input voltage of the first direct current conversion circuit to increase. Because the input voltage of the first direct current conversion circuit is less than the average value of the input voltages, compared with preferably boosting a direct current conversion circuit whose input voltage is greater than the average value of the input voltages, preferably boosting the input voltage of the first direct current conversion circuit can make the photovoltaic inverter implement more power derating while keeping the direct current bus voltage stable.

In some feasible implementations, after the photovoltaic inverter switches to the derating mode, the controller in the photovoltaic inverter is configured to control the input voltage of the first direct current conversion circuit to increase, and the first direct current conversion circuit is a direct current conversion circuit with a smallest input voltage in the plurality of direct current conversion circuits. Specifically, the photovoltaic inverter shown in FIG. 2 is used as an example. After the photovoltaic inverter switches to the derating mode, the input voltages of the direct current conversion circuit 101 to the direct current conversion circuit 10n are obtained, and the direct current conversion circuit with the smallest input voltage in the plurality of direct current conversion circuits is obtained. For example, if n is 3, the photovoltaic inverter includes three direct current conversion circuits in total: the direct current conversion circuit 101, the direct current conversion circuit 102, and a direct current conversion circuit 103. When the photovoltaic inverter runs in the maximum power point tracking mode, if input voltages of the direct current conversion circuit 101, the direct current conversion circuit 102, and the direct current conversion circuit 103 are 400 v, 450 v, and 490 v respectively, voltages corresponding to maximum power points of the photovoltaic string 1, the photovoltaic string 2, and the photovoltaic string 3 are 400 v, 450 v, and 490 v respectively. Refer to FIG. 4 together. FIG. 4 is a P-V curve diagram of different photovoltaic strings connected to the photovoltaic inverter according to this application. FIG. 4 includes P-V curves of the photovoltaic string 1, the photovoltaic string 2, and the photovoltaic string 3. When the photovoltaic inverter runs in the maximum power point tracking mode, the photovoltaic string 1, the photovoltaic string 2, and the photovoltaic string 3 are at maximum power points, and voltages corresponding to the maximum power points are 400 v, 450 v, and 490 v respectively. A voltage at two ends of the bus capacitor C1 in the current photovoltaic inverter is a bus voltage (for example, 1500 v). A magnitude of the direct current bus voltage of the photovoltaic inverter is directly related only to an input voltage of a direct current conversion circuit with a largest input voltage in the plurality of direct current conversion circuits. In the plurality of direct current conversion circuits, the direct current conversion circuit 103 has a largest input voltage. Therefore, if an input voltage of a direct current conversion circuit is controlled to exceed the input voltage of the direct current conversion circuit 103, the bus voltage is increased. A difference between the input voltage of the direct current conversion circuit 101 and the input voltage of the direct current conversion circuit 103 is 90 v (490 v - 400 v), a difference between the input voltage of the direct current conversion circuit 102 and the input voltage of the direct current conversion circuit 103 is only 40 v (490 v - 450 v), and a difference between the input voltage of the direct current conversion circuit 103 and the input voltage of the direct current conversion circuit 103 is 0 v. The difference between the input voltage of the direct current conversion circuit 101 and the input voltage of the direct current conversion circuit 103 is the largest, so that the input voltage of the first direct current conversion circuit is preferably increased, to implement maximum power derating while the direct current bus voltage is kept stable.

Optionally, when controlling the input voltage of the first direct current conversion circuit to increase, the controller simultaneously controls the input voltages of the plurality of direct current conversion circuits including the first direct current conversion circuit to increase. Specifically, for example, the first direct current conversion circuit is a direct current conversion circuit with a smallest input voltage in the plurality of direct current conversion circuits. After the photovoltaic inverter switches to the derating mode, input voltages of the direct current conversion circuit 101 to the direct current conversion circuit 10n are obtained. The direct current conversion circuit with the smallest input voltage in the plurality of direct current conversion circuits is the direct current conversion circuit 101, and the input voltages of the direct current conversion circuit 101 to the direct current conversion circuit 10n are increased sequentially. Then, the controller preferably controls the input voltages of the direct current conversion circuit 101 with the smallest input voltage and the direct current conversion circuit 102 (whose input voltage is only greater than the input voltage of the direct current conversion circuit 101) to increase simultaneously, and keeps the input voltages of the direct current conversion circuit 103 to the direct current conversion circuit 10n unchanged. Photovoltaic strings connected to the direct current conversion circuit 101 and the direct current conversion circuit 102 both deviate from maximum power points, so that output power of the direct current conversion circuit 101 and output power of the direct current conversion circuit 102 are decreased simultaneously, and derating efficiency of the photovoltaic inverter is improved.

In some feasible implementations, when the photovoltaic inverter is in the derating mode, a temperature of the photovoltaic inverter is greater than or equal to a first threshold, or the direct current bus voltage is greater than or equal to a second threshold, or a difference between a power grid voltage and the direct current bus voltage is greater than or equal to a third threshold. Specifically, in a process in which the photovoltaic inverter runs in the maximum power point tracking mode, the controller obtains the temperature of the photovoltaic inverter. When the temperature is greater than or equal to the first threshold, it is determined that the photovoltaic inverter is currently overheated. In this case, the photovoltaic inverter is controlled to enter the derating mode, to avoid impact on device safety caused by continuous temperature increase of the photovoltaic inverter. Alternatively, the controller obtains a voltage at two ends of the direct current bus. If the voltage at the two ends of the direct current bus is greater than or equal to the second threshold, it is determined that direct current bus overvoltage occurs. In this case, the photovoltaic inverter is controlled to enter the derating mode to avoid an excessively large loss of the photovoltaic inverter. Alternatively, the controller obtains a voltage at two ends of the direct current bus and a power grid voltage. If a difference between the power grid voltage and the direct current bus voltage is greater than or equal to the third threshold, it is determined that power grid overvoltage occurs. In this case, the photovoltaic inverter is controlled to enter the derating mode to avoid an excessively large loss of the photovoltaic inverter.

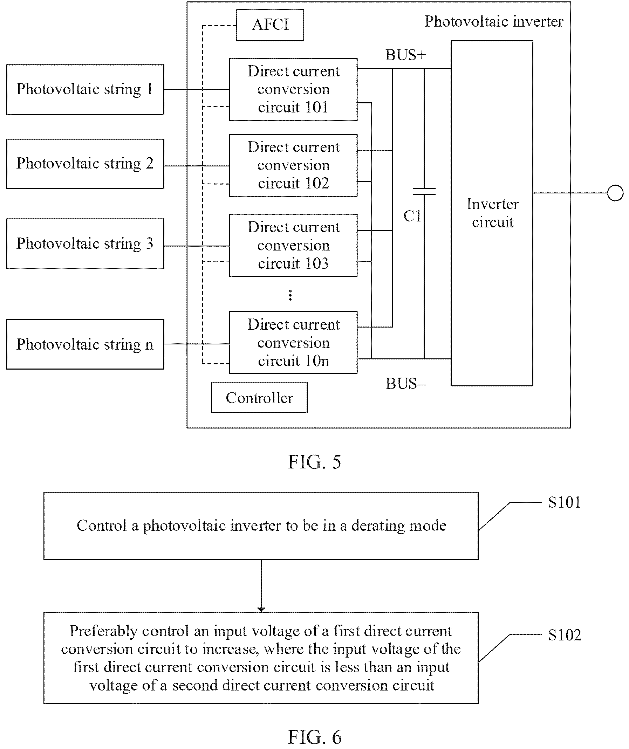

In some feasible implementations, the photovoltaic inverter includes an arc-fault circuit interrupter (Arc-Fault Circuit-Interrupter, AFCI). The AFCI detects a direct current arc fault of the photovoltaic inverter by identifying an arc fault feature signal in a connection circuit between the photovoltaic string and the photovoltaic inverter, and disconnects the circuit before the arc fault develops into a fire or a short circuit occurs in the circuit, to ensure safe operation of the photovoltaic inverter. FIG. 5 is another simple diagram of the photovoltaic inverter according to this application. As shown in FIG. 5, the plurality of direct current conversion circuits in the photovoltaic inverter are connected to a same AFCI. In a process of controlling the input voltage of the first direct current conversion circuit to increase, the controller is further configured to: when a difference between an input current of the first direct current conversion circuit and an input current of the another direct current conversion circuit is greater than or equal to a fourth threshold, control the input voltage of the first direct current conversion circuit to remain unchanged, and control an input voltage of the another direct current conversion circuit to increase. Specifically, for example, the first direct current conversion circuit is a direct current conversion circuit with a smallest input voltage in the plurality of direct current conversion circuits. After the photovoltaic inverter switches to the derating mode, the controller obtains input voltages of the direct current conversion circuit 101 to the direct current conversion circuit 10n. A direct current conversion circuit with a smallest input voltage in the plurality of direct current conversion circuits is the direct current conversion circuit 101, and input voltages of the direct current conversion circuit 102 to the direct current conversion circuit 10n are increased sequentially. Then, the controller preferably controls the input voltage of the direct current conversion circuit 101 with the smallest input voltage to increase, so that the photovoltaic string 1 connected to the direct current conversion circuit 101 deviates from a maximum power point. Output power of the direct current conversion circuit 101 is decreased, so as to decrease output power of the inverter circuit in the photovoltaic inverter. In a process of controlling the input voltage of the direct current conversion circuit 101 to increase, if a difference between an input current of the direct current conversion circuit 101 and an input current of any one of the direct current conversion circuits 102 to 10n is greater than or equal to the fourth threshold, a difference between input currents of the current direct current conversion circuits is excessively large. The excessively large current difference easily affects detection precision of the AFCI, resulting in an arc fault misjudgment. When the difference between the input current of the direct current conversion circuit 101 and the input current of any direct current conversion circuit is greater than or equal to the fourth threshold (for example, set between 0.2 A and 10 A), the controller controls the input voltage of the direct current conversion circuit 101 to remain unchanged, and controls the input voltage of the another direct current conversion circuit to increase. For example, the input voltage of the direct current conversion circuit 102 (whose input voltage is only greater than the input voltage of the direct current conversion circuit 101) is controlled to increase, and the output power of the direct current conversion circuit 102 is decreased, to continue derating while ensuring an AFCI detection function.

FIG. 6 is a schematic flowchart of a derating control method for a photovoltaic inverter according to this application. The derating control method for a photovoltaic inverter provided in this application is applicable to a control process of the photovoltaic inverter shown in FIG. 2 and FIG. 5. As shown in FIG. 6, the derating control method for a photovoltaic inverter provided in this application includes the following steps.

S101: Control the photovoltaic inverter to be in a derating mode.

S102: Preferably control an input voltage of a first direct current conversion circuit to increase, where the input voltage of the first direct current conversion circuit is less than an input voltage of a second direct current conversion circuit.

In some feasible implementations, after the photovoltaic inverter switches to a derating mode, input voltages of at least two direct current conversion circuits in the photovoltaic inverter are obtained. For example, input voltages of the first direct current conversion circuit and the second direct current conversion circuit are obtained as 400 v and 450 v respectively, in other words, the input voltage of the first direct current conversion circuit is less than the input voltage of the second direct current conversion circuit. If an input voltage of a direct current conversion circuit with a largest input voltage in a plurality of direct current conversion circuits is 490 v, because a magnitude of a direct current bus voltage of the photovoltaic inverter is directly related only to the input voltage of the direct current conversion circuit with the largest input voltage in the plurality of direct current conversion circuits, if an input voltage of a direct current conversion circuit is controlled to exceed the largest input voltage, the direct bus voltage of the photovoltaic inverter is increased. To decrease a fluctuation amplitude of the bus voltage while derating the photovoltaic inverter, the input voltage of the first direct current conversion circuit is first controlled to increase, and a photovoltaic string connected to the first direct current conversion circuit deviates from a maximum power point to derate the photovoltaic inverter. Herein, because a difference between the input voltage of the first direct current conversion circuit and the largest input voltage is 90 v (490 v - 400 v), and a difference between the second direct current conversion circuit and the largest input voltage is only 40 v (490 v - 450 v), a difference between the input voltage of the first direct current conversion circuit and the largest input voltage in the plurality of direct current conversion circuits is larger. Preferably controlling the input voltage of the first direct current conversion circuit to increase can make the photovoltaic inverter implement more power derating while keeping the direct current bus voltage stable.

Optionally, after the photovoltaic inverter switches to the derating mode, the input voltage of the first direct current conversion circuit is controlled to increase from a maximum power point of a correspondingly connected photovoltaic string. If the operating point of the photovoltaic string is controlled to move leftward from the maximum power point, in other words, an output voltage of the photovoltaic string is controlled to decrease, the output voltage of the photovoltaic string may be decreased to a shutdown voltage value of the photovoltaic inverter. Consequently, the photovoltaic inverter is triggered to shut down due to input undervoltage, and normal operation of the photovoltaic inverter is affected. Therefore, in this application, the operating point of the photovoltaic string is controlled to move rightward from the maximum power point, in other words, the output voltage of the photovoltaic string is controlled to increase, to derate the photovoltaic inverter, and avoid shutdown caused by input undervoltage of the photovoltaic inverter.

Optionally, in actual application, it is possible that the photovoltaic inverter is still overheated after one-time derating. In this case, an output voltage of a photovoltaic string whose operating point has been moved rightward once may need to be increased again, in other words, the operating point of the corresponding photovoltaic string is further moved rightward. For example, in the first derating of the photovoltaic inverter, the photovoltaic string connected to the first direct current conversion circuit is controlled to move rightward from the maximum power point, for example, the output voltage of the photovoltaic string is controlled to range from 400 v to 440 v to implement power derating. If the photovoltaic inverter is still overheated after the first derating, because the output voltage of the photovoltaic string connected to the first direct current conversion circuit is still less than an output voltage (450 v) of the second direct current conversion circuit, an operating point of the photovoltaic string connected to the first direct current conversion circuit is preferably controlled to further move rightward. This can implement more power derating while keeping the direct current bus voltage stable, thereby further meeting a derating requirement of the photovoltaic inverter.

Optionally, when the controller controls the input voltage of the first direct current conversion circuit to increase, and the input voltage of the first direct current conversion circuit is increased to be the same as the input voltage of the second direct current conversion circuit, the controller simultaneously controls the input voltage of the first direct current conversion circuit and the input voltage of the second direct current conversion circuit to increase. Therefore, output power of the first direct current conversion circuit and output power of the second direct current conversion circuit are decreased simultaneously, and derating efficiency of the photovoltaic inverter is improved.

Further, in a process of controlling the input voltage of the first direct current conversion circuit to increase, because the input voltage of the second direct current conversion circuit is large, the input voltage of the second direct current conversion circuit is controlled to remain unchanged, to avoid a case in which the input voltage of the second direct current conversion circuit exceeds the largest input voltage in the plurality of direct current conversion circuits, thereby avoiding an increase in the bus voltage.

In some feasible implementations, after the photovoltaic inverter switches to the derating mode, input voltages of direct current conversion circuits in the photovoltaic inverter are obtained, and an average value of the input voltages of the plurality of direct current conversion circuits is obtained based on the input voltages of the direct current conversion circuits. Then, a direct current conversion circuit whose input voltage is less than the average value of the input voltages of the plurality of direct current conversion circuits is used as the first direct current conversion circuit, and the input voltage of the first direct current conversion circuit is controlled to increase. Because the input voltage of the first direct current conversion circuit is less than the average value of the input voltages, compared with preferably boosting a direct current conversion circuit whose input voltage is greater than the average value of the input voltages, preferably boosting the input voltage of the first direct current conversion circuit can make the photovoltaic inverter implement more power derating while keeping the direct current bus voltage stable.

In some feasible implementations, after the photovoltaic inverter switches to the derating mode, input voltages of direct current conversion circuits in the photovoltaic inverter are obtained, a direct current conversion circuit with a smallest input voltage is selected as the first direct current conversion circuit based on the input voltages of the direct current conversion circuits, and the input voltage of the first direct current conversion circuit is controlled to increase. In comparison with boosting an input voltage of another direct current conversion circuit, a difference between the input voltage of the first direct current conversion circuit and the largest input voltage in the plurality of direct current conversion circuits is the largest. Preferably boosting the input voltage of the first direct current conversion circuit can implement maximum power derating while keeping the direct current bus voltage stable.

In some feasible implementations, the photovoltaic inverter includes an AFCI, and the plurality of direct current conversion circuits in the photovoltaic inverter are jointly connected to a same AFCI. In a process of controlling the input voltage of the first direct current conversion circuit to increase, when a difference between an input current of the first direct current conversion circuit and an input current of another direct current conversion circuit is greater than or equal to a fourth threshold, the input voltage of the first direct current conversion circuit is controlled to remain unchanged, and an input voltage of the another direct current conversion circuit is controlled to increase. Specifically, in the process of controlling the input voltage of the first direct current conversion circuit to increase, if a difference between an input current of the first direct current conversion circuit and an input current of any direct current conversion circuit in the another direct current conversion circuit is greater than or equal to the fourth threshold, a difference between input currents of the direct current conversion circuits is excessively large. The excessively large current difference easily affects detection precision of the AFCI, resulting in an arc fault misjudgment. When the difference between the input current of the first direct current conversion circuit and the input current of any direct current conversion circuit reaches the value greater than or equal to the fourth threshold, the input voltage of the first direct current conversion circuit is controlled to remain unchanged, and the input voltage of the another direct current conversion circuit is controlled to increase, so that derating is further implemented while an AFCI detection function is ensured.

## Claims

1. A photovoltaic inverter, comprising an inverter circuit, a plurality of direct current conversion circuits, and a controller, wherein
the plurality of direct current conversion circuits are configured to: perform direct current conversion on a direct current from a photovoltaic module and output a converted direct current to the inverter circuit, and the plurality of direct current conversion circuits comprise a first direct current conversion circuit and a second direct current conversion circuit;
the inverter circuit is configured to convert direct currents from the plurality of direct current conversion circuits into alternating currents; and
when the photovoltaic inverter is in a derating mode, the controller is configured to control an input voltage of the first direct current conversion circuit to increase, to decrease output power of the first direct current conversion circuit, so as to decrease output power of the inverter circuit, wherein the input voltage of the first direct current conversion circuit is less than an input voltage of the second direct current conversion circuit.

2. The photovoltaic inverter according to claim 1, wherein the plurality of direct current conversion circuits comprise at least one third direct current conversion circuit, an input voltage of the third direct current conversion circuit is greater than the input voltage of the first direct current conversion circuit, and the input voltage of the first direct current conversion circuit is less than or equal to an average value of input voltages of the plurality of direct current conversion circuits.

3. The photovoltaic inverter according to claim 2, wherein the first direct current conversion circuit is a direct current conversion circuit with a smallest input voltage in the plurality of direct current conversion circuits.

4. The photovoltaic inverter according to any one of claims 1 to 3, wherein the photovoltaic inverter comprises a direct current bus, and output ends of the plurality of direct current conversion circuits are connected in parallel and then connected to an input end of the inverter circuit through the direct current bus; and
when a temperature of the photovoltaic inverter is greater than or equal to a first threshold, or a direct current bus voltage is greater than or equal to a second threshold, or a difference between a power grid voltage and a direct current bus voltage is greater than or equal to a third threshold, the photovoltaic inverter is in the derating mode.

5. The photovoltaic inverter according to any one of claims 1 to 4, wherein when the controller controls the input voltage of the first direct current conversion circuit to increase, the input voltage of the second direct current conversion circuit remains unchanged.

6. The photovoltaic inverter according to any one of claims 1 to 5, wherein the controller is configured to control the input voltage of the first direct current conversion circuit to increase from a maximum power point of a correspondingly connected photovoltaic string.

7. The photovoltaic inverter according to any one of claims 1 to 6, wherein the controller is configured to: in a process of controlling the input voltage of the first direct current conversion circuit to increase, when output power of the photovoltaic inverter is less than a specified threshold, control the photovoltaic inverter to exit the derating mode.

8. The photovoltaic inverter according to any one of claims 1 to 6, wherein the controller is configured to: in a process of controlling the input voltage of the first direct current conversion circuit to increase, when the input voltage of the first direct current conversion circuit reaches a largest input voltage in the plurality of direct current conversion circuits, and output power of the photovoltaic inverter is greater than or equal to a specified threshold, control the input voltage of the first direct current conversion circuit to remain unchanged and control the input voltage of the second direct current conversion circuit to increase.

9. The photovoltaic inverter according to any one of claims 1 to 6, wherein the controller is configured to: in a process of controlling the input voltage of the first direct current conversion circuit to increase, when the input voltage of the first direct current conversion circuit is equal to the input voltage of the second direct current conversion circuit, control the input voltage of the first direct current conversion circuit and the input voltage of the second direct current conversion circuit to increase simultaneously.

10. The photovoltaic inverter according to any one of claims 1 to 9, wherein the photovoltaic inverter comprises an arc-fault circuit interrupter, and the plurality of direct current conversion circuits are connected to a same arc-fault circuit interrupter; and
the controller is further configured to: in the process of controlling the input voltage of the first direct current conversion circuit to increase, when a difference between an input current of the first direct current conversion circuit and an input current of another direct current conversion circuit is greater than or equal to a fourth threshold, control the input voltage of the first direct current conversion circuit to remain unchanged, and control an input voltage of the another direct current conversion circuit to increase.

11. A derating control method for a photovoltaic inverter, wherein the photovoltaic inverter comprises an inverter circuit and a plurality of direct current conversion circuits, the plurality of direct current conversion circuits are configured to: perform direct current conversion on a direct current from a photovoltaic module and output a converted direct current to the inverter circuit, the inverter circuit is configured to convert direct currents from the plurality of direct current conversion circuits into alternating currents, the plurality of direct current conversion circuits comprise a first direct current conversion circuit and a second direct current conversion circuit, and the method comprises:
when the photovoltaic inverter is in a derating mode, controlling an input voltage of the first direct current conversion circuit to increase, to decrease output power of the first direct current conversion circuit, so as to decrease output power of the inverter circuit, wherein the input voltage of the first direct current conversion circuit is less than an input voltage of the second direct current conversion circuit.

12. The method according to claim 11, wherein the plurality of direct current conversion circuits comprise at least one third direct current conversion circuit, an input voltage of the third direct current conversion circuit is greater than the input voltage of the first direct current conversion circuit, and the method further comprises:
controlling the input voltage of the first direct current conversion circuit to increase, wherein the input voltage of the first direct current conversion circuit is less than or equal to an average value of input voltages of the plurality of direct current conversion circuits.

13. The method according to claim 12, wherein the method further comprises:
controlling the input voltage of the first direct current conversion circuit to increase, wherein the first direct current conversion circuit is a direct current conversion circuit with a smallest input voltage in the plurality of direct current conversion circuits.

14. The method according to any one of claims 11 to 13, wherein the method further comprises:
when the input voltage of the first direct current conversion circuit is controlled to increase, keeping the input voltage of the second direct current conversion circuit unchanged.

15. The method according to any one of claims 11 to 14, wherein the method further comprises:
controlling the input voltage of the first direct current conversion circuit to increase from a maximum power point of a correspondingly connected photovoltaic string.
